# EUROPÄISCHE PATENTANMELDUNG

(11) **EP 1 030 095 A2**
(43) Veröffentlichungstag der Anmeldung: **23.08.2000**
(21) Anmeldenummer: 00102521.2
(22) Anmeldetag: 07.02.2000
(51) Int. Cl.: F16L 55/033, F01N 7/18

(54) **Elastische Aufhängung für schwingende Bauteile**

(30) Priorität: 15.02.1999 DE 19906259
(71) Anmelder: WOCO Franz-Josef Wolf & Co., D-63628 Bad Soden-Salmünster (DE)
(72) Erfinder: Wolf, Franz Josef, 63628 Bad Soden-Salmünster (DE); Möller, Ralf, 36381 Schlüchtern (DE); Heckmann, Gerhard, 36381 Schlüchtern (DE); Kalkhof, Volker, 63571 Gelnhausen (DE)
(74) Vertreter: Jaeger, Klaus, Dipl.-Chem. Dr.

(57) **Zusammenfassung**

Es ist eine elastische Aufhängung für schwingende Bauteile, insbesondere eine Halteschlaufe für eine Kraftfahrzeugabgasanlage vorgesehen, bei der eine Schlaufe (1) zwei innenliegende Halteösen (2,3) aufweist, die über mehrere Elastomerstege (4,4';5,5') mit einem umgebenden Ringabschnitt (6) der Schlaufe (1) verbunden sind, wobei erfindungsgemäß die Aufhängung als Zwei-Massen-Federsystem ausgebildet ist und zur Tilgung von Störschwingungen der Ringabschnitt (6) der Schlaufe (1) in diesem System als Tilgermasse herangezogen wird.

## Beschreibung

Die Erfindung betrifft eine elastische Aufhängung für schwingende Bauteile, insbesondere betrifft diese eine Halteschlaufe für eine Kraftfahrzeugabgasanlage, bei der eine Schlaufe zwei innenliegende Halteösen aufweist, die über Elastomerstege mit einem umgebenden Ringabschnitt der Schlaufe verbunden sind.

Die Abgasanlage eines Kraftfahrzeuges im Betrieb ist permanent mit Schwingungen beaufschlagt, denen die unterschiedlichsten Ursachen zugrunde liegen. Zu nennen sind hier u.a. die von der Brennkraftmaschine des Kraftfahrzeuges je nach Drehzahlbereich erzeugten Schwingungen, die auf die mit dieser weitgehend starr verbundene Abgasleitung nahezu ungedämpft übertragen werden. Zusätzlich treten durch den Verbrennungsvorgang im Motor selbst und die Ventilbewegungen Druckwechsel im Abgaskanal auf, die sich als Druckspitzen im abzuführenden Abgas fortpflanzen und die Abgasanlage zu Schwingungen anregen. Diese Schwingungen zweiter Ordnung werden als akustisch besonders störend empfunden und müssen daher gedämpft werden.

Zur Vermeidung der Übertragung dieser Schwingungen in die Karosserie sind in der Regel die Abgasanlagen an wenigen Punkten der Fahrzeugunterseite mittels einer elastischen Aufhängung unter der Verwendung eines dämpfenden Zwischenglieds aus einem elastischen Werkstoff fixiert. Infolge der elastischen Aufhängung der gesamten Abgasanlage lediglich an wenigen Punkten wird allerdings ein eigenes schwingungsfähiges System erzeugt, das relativ zum Kraftfahrzeug ausschlagen kann, insbesondere dann, wenn von außen Anregungsstöße in das Kraftfahrzeug eingeleitet werden. Solche Erregungen treten regelmäßig durch Fahrbahnunebenheiten auf. Geringen Einfluß nimmt aber auch das Abrollverhalten der Reifen. In Abhängigkeit der Fahrbahnbeschaffenheit und der Fahrtgeschwindigkeit des Kraftfahrzeuges können sich so Schwingungen im Frequenzbereich von ca. 5 bis 1.200 Hz einstellen, wobei sich in der Regel ein breites Spektrum überlappender Frequenzen einstellt, die sich zusätzlich noch mit den aus dem Motorraum herrührenden Frequenzbereichen vermischen. Selbstverständlich gehen hierbei die niedrigen Frequenzen, die beispielsweise bei langsamer Fahrt über unwegiges Gelände auftreten, mit hohen Schwingungsamplituden der Abgasanlage einher.

Wie aus dem Stand der Technik bekannt ist, lassen sich derartige Schwingungen grundsätzlich über eine entsprechende Dimensionierung und Auslegung der elastischen Elemente der unterschiedlichen Aufhängungen bedämpfen, wobei diese zur Vermeidung des Zerreißens der elastischen Elemente bei hohen Amplituden in der Regel Verstärkungs- bzw. Versteifungselemente nach der Art einvulkanisierter Einlagen aus Werkstoffen mit im Vergleich zum Elastomerwerkstoff höherer Festigkeit und Steifigkeit aufweisen.

Im Zuge der weiteren Verminderung der Abgasemissionen haben sich in jüngster Zeit die Gewichte der Abgasanlagen vor allem aufgrund zunehmender Volumen der Katalysatoren beträchtlich erhöht. Demzufolge bedarf es einer weiteren Verstärkung der aus dem Stand der Technik bekannten elastischen Aufhängeschlaufen, wobei neben den vorhergehend erwähnten verstärkenden Einlagen vor allem die Verwendung festerer und härterer Elastomerwerkstoffe eine Rolle spielt. Der damit einhergehenden Zunahme der dynamischen Federsteifigkeit der elastischen Werkstoffe unter dynamischer Belastung wohnt allerdings der Nachteil inne, daß die Entkopplung akustischer Frequenzen erheblich vermindert wird. Vor allem Schwingungen im höher liegenden Frequenzbereich des auftretenden Spektrums werden von der Abgasanlage über die Aufhängung in das Unterbodenblech nahezu ungedämpft übertragen. Die so in das Unterbodenblech eingeleiteten Störschwingungen werden im folgenden dann von diesem flächig in den Fahrgastinnenraum abgestrahlt, so daß erhebliche akustische Komforteinbußen die Folge sind.

Eine elastische Aufhängung der im Oberbegriff des Patentanspruchs 1 beschriebenen Art ist aus der deutschen Offenlegungsschrift DE 44 39 630 A1 bekannt, die in der Form einer Schlaufe mit zwei in Lastrichtung stirnseitig einander gegenüberliegenden Halteösen ausgebildet ist. Ein an der Karosserieunterseite des Fahrzeugs angeordneter Traghaken greift in die eine Halteöse ein, während die andere Halteöse der Aufnahme eines an der Abgasanlage befestigten Lasthakens dient. Die umschließende Elastomerschlaufe weist eine einvulkanisierte Einlage auf mit der Aufgabe, die aufnehmbare Zugkraft der Gesamtanordnung zu erhöhen. Bei Verwendung eines steifen Elastomers in dieser Aufhängung bleibt jedoch stets das Problem bestehen, daß akustisch relevante Schwingungen nicht wirksam bedämpft werden.

Der vorliegenden Erfindung liegt daher zur Beseitigung der vorhergehend geschilderten Nachteile die Aufgabe zugrunde, eine elastische Aufhängung der geschilderten Art für schwingende Bauteile zu schaffen, die die Übertragung von Störschwingungen auch bei der Verwendung von Elastomerwerkstoffen mit hoher statischer oder dynamischer Steifigkeit vermeidet.

Zur Lösung dieser Aufgabe weist die Erfindung die im Anspruch 1 angegebenen Merkmale auf. Vorteilhafte Ausgestaltungen hiervon ergeben sich aus den Unteransprüchen.

Der wesentliche Gegenstand der Erfindung beruht somit nicht auf einer passiven Dämpfung, wie bei sämtlichen aus dem Stand der Technik bekannten elastischen Aufhängungen, sondern auf einer aktiven Tilgung der gewünschten Frequenzbereiche. Dies wird auf die physikalisch an sich bekannte Art und Weise mit einem Zwei-Massen-Federsystem bewerkstelligt. Erfindungsgemäß dient hierbei der Ringabschnitt der Schlaufe als Tilgermasse, während die Abgasanlage die Schwingungsmasse darstellt. Nach Maßgabe der zu tilgenden Frequenzbereiche werden gemäß der Erfindung die Federsteifigkeiten der Elastomerstege einerseits und die Tilgermasse der Schlaufe zur Erzielung der hierfür notwendigen Resonanzfrequenz andererseits individuell aufeinander abgestimmt.

Die Elastomerstege, die den Ringabschnitt der Schlaufe mit den innenliegenden Halteösen verbinden, können prinzipiell beliebig ausgestaltet sein, greifen in einer Ausgestaltung der Erfindung jedoch idealerweise kreuzförmig an den Halteösen, d.h. in Lastrichtung einerseits mit tragender und andererseits mit stützender Funktion an. Dies bedeutet, daß beim Schwingen der Halteösen neben der auftretenden Schubbelastung die tragenden Elastomerstege im wesentlichen auf Zug belastet werden, wohingegen die Elastomerstege mit stützende Funktion hauptsächlich einer Druckbelastung ausgesetzt sind. Über deren Ankopplung an den Ringabschnitt werden die Aufhängekräfte übertragen, wobei aufgrund der kreuzförmigen Lagerung die Halteösen stets unter Wahrung der Kraftübertragungsfunktion relativ zueinander frei schwingen können.

In einer weiteren Ausgestaltung der Erfindung sind die an einer der Halteösen angreifenden Elastomerstege in Abhängigkeit der für das gewünschte Zwei-Massen-Federsystem zu erzielenden Federkenndaten jeweils hinsichtlich der Materialauswahl und Geometrie unterschiedlich konfiguriert, was sich auch an den auftretenden Belastungen orientiert. Zur Erzielung bestimmter Federkenndaten läßt sich für den Fachmann in an sich bekannter Weise auch die Matrix der einzelnen Elastomerstege speziell konfigurieren.

Der Ringabschnitt der Schlaufe dient des weiteren als Verliersicherung für die Halteösen in der Weise, daß bei extrem hohen Schwingungsamplituden die Halteösen auf diesem zum Anschlag kommen und so deren Freiweg begrenzt ist. Gemäß der Erfindung ist der Abstand zwischen dem Ringabschnitts der Schlaufe und den Halteösen und damit der frei zur Verfügung stehende Weg für den Ausschlag der Halteösen dabei stets so zu wählen, daß eine Überdehnung der jeweiligen Elastomerstege grundsätzlich verhindert wird. Auf diese Art und Weise ist sowohl ein Einreißen über Scherwirkungen als auch ein unerwünschtes Setzverhalten des Elastomerwerkstoffs ausgeschlossen, selbst wenn extrem hohe Schwingungsamplituden in die Abgasanlage induziert werden.

Um ideale Freiwege für die Halteösen bzw. Federwege für die Elastomerstege bereitzustellen, eignet sich insbesondere eine weitere Ausgestaltung der Erfindung, wonach der Ringabschnitt der Schlaufe spiegelsymmetrisch ausgebildet ist und die gemeinsame Querschnittsmittelachse beider Halteösen genau in der Spiegelsymmetrieebene dieses Ringabschnitts liegt.

Nach Maßgabe der zu tilgenden Störschwingung muß im Zwei-Massen-Federsystem neben der vorhergehend bereits geschilderten Abstimmung der einzelnen Federsteifigkeiten die Tilgermasse entsprechend festgelegt werden, um eine entsprechende Resonanzfrequenz zu erhalten. Hierbei sind unterschiedliche Massenwerte gemäß der Erfindung dadurch zu erzielen, daß der Ringabschnitt der Schlaufe aus einem Metall, beispielsweise Stahl oder Aluminium, oder aus einem im Vergleich dazu leichteren Kunststoff mit entsprechenden Größenabmessungen ausgebildet wird. Als Kunststoff kommen hierbei nur temperaturbeständige Arten in Frage, da die extreme Wärmeentwicklung einer Abgasanlage zu berücksichtigen ist.

Idealerweise ist gemäß der Erfindung diese Tilgermasse mit einem ebenfalls ringförmigen Querschnitt ausgebildet und in eine Elastomerschicht einvulkanisiert, so daß Korrosionsschäden bei der Verwendung von Metallen verhindert werden. Diese die Tilgermasse umschließende Elastomerschicht ist dabei mit den Elastomerstegen an der Innenseite der Schlaufe stoffschlüssig verbunden.

Die Ausbildung der elastischen Aufhängung gemäß der vorliegenden Erfindung als Zwei-Massen-Federsystem verdeutlicht deren Vielseitigkeit. Durch die Anbindung einer zusätzlichen Masse als Tilger in Form des Ringabschnitts der Schlaufe ist das Dämpfungsverhalten der Aufhängung gemäß der Erfindung nicht allein auf die vorhandenen Federelemente beschränkt, wie beim Stand der Technik. Vielmehr läßt sich über das Zusammenspiel der Tilgermasse und bestimmter statischer und dynamischer Federsteifigkeiten stets ein gewünschter Frequenzbereich tilgen und über den konstruktiven Aufbau gleichzeitig die Aufhängung auch schwerer Kraftfahrzeugabgasanlagen bewerkstelligen.

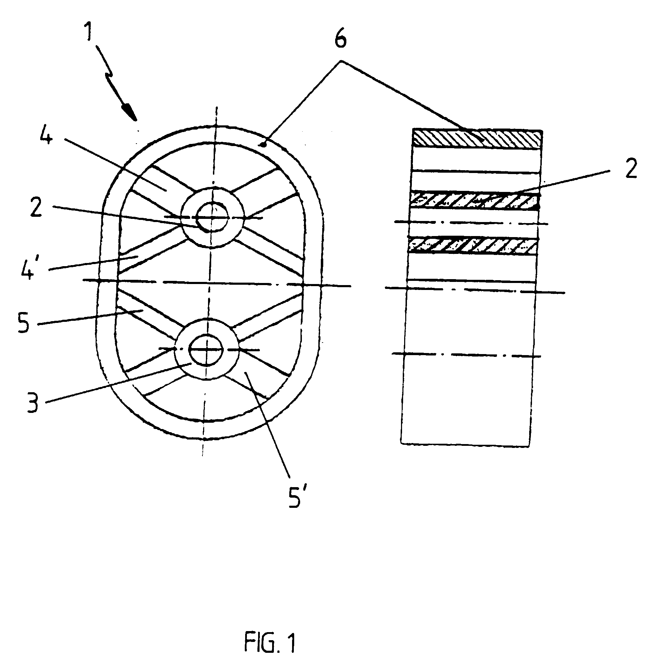

Ein Ausführungsbeispiel der elastische Aufhängung mit den Merkmalen der Erfindung ist im folgenden in Verbindung mit der Zeichnung näher erläutert. Diese zeigt in
- Fig. 1: eine schematische Darstellung in Draufsicht und teils im Querschnitt der Halteschlaufe mit den Merkmalen der Erfindung.

Die einzige Fig. 1 zeigt die elastische Aufhängung gemäß der vorliegenden Erfindung als Halteschlaufe 1 in ihrer einbaugemäßen Ausrichtung. In dieser sind zwei Halteösen 2, 3 angeordnet. Die in der Fig. 1 obenliegende Halteöse 2 dient der Aufnahme eines nicht dargestellten Traghakens, der am Unterbodenblech oder Rahmenträger des Kraftfahrzeugs befestigt ist, während die in der Fig. 1 untenliegende Halteöse 3 einen ebenfalls nicht dargestellten Lasthaken an der aufzuhängenden Abgasanlage aufnimmt. Diese Halteösen 2, 3 können je nach konstruktiven Erfordernissen aus unterschiedlichen Werkstoffen, beispielsweise aus gegebenenfalls einvulkanisiertem Metall oder sogar vorgespanntem Gummi hergestellt sein.

Jede der Halteösen 2, 3 steht über mehrere Elastomerstege 4, 4', 5, 5' mit dem umgebenden Ringabschnitt 6 der Schlaufe 1 in Verbindung. Bei dem in der Fig. 1 gezeigten Ausführungsbeispiel ist die Halteöse 2 von einer Gruppe an vier im obenliegenden Teil des Ringabschnitts 6 der Schlaufe 1 angebundenen Elastomerstegen 4, 4' und die Halteöse 3 von einer Gruppe an vier im untenliegenden Teil des Ringabschnitts 6 angebundenen Elastomerstegen 5, 5' so umgeben, daß diese die Halteösen 2, 3 jeweils kreuzförmig einschließen. Hierbei bilden sich, in der am einbaugemäß ausgerichteten Aufhängung vorherrschenden Lastrichtung gesehen, paarweise zwei Elastomerstege 4, 5 mit tragender Funktion und zwei Elastomerstege 4', 5' mit stützender Funktion. Innerhalb einer jeden Gruppe unterscheiden sich die Elastomerstege 4, 4' und 5, 5' paarweise in ihrer geometrischen Ausgestaltung, so daß die Elastomerstege 4, 5' und 4', 5 jeweils gleiche Abmessungen aufweisen. Hierdurch lassen sich für entgegengerichtete Schwingungswege unterschiedliche Federsteifigkeiten einstellen. Infolge der kreuzförmigen Anordnung um jede Halteöse 2, 3 lassen sich über das Zusammenspiel der einzelnen Elastomerstege 4, 4', 5, 5' für einen Ausschlag der Halteösen 2, 3 auch unterschiedliche Steifigkeiten in jeder Ausschlagsrichtung bewerkstelligen.

Bei dem in der Fig. 1 gezeigten Ausführungsbeispiel ist die Halteschlaufe 1 mit dem als Tilgermasse dienenden Ringabschnitt 6 spiegelsymmetrisch aufgebaut. Je nach den vorhandenen Platzverhältnissen an der Fahrzeugunterseite kann der Ringabschnitt 6 der Schlaufe 1 selbstverständlich auch eine ovale, ellipsenförmige, rhombusförmige oder sonstige geeignete Gestalt aufweisen. Gemäß der Erfindung fallen die gemeinsamen Querschnittsmittelachsen der beiden Halteösen 2, 3 mit der Spiegelsymmetrieebene der Schlaufe 1 zusammen. Der in sich geschlossene Ringabschnitt 6 dient gleichzeitig als Verliersicherung für die Halteösen 2, 3, so daß deren Ausschlag vor allem entgegen und in Lastrichtung bei gegebenenfalls extrem hohen Schwingungsamplituden begrenzt wird derart, daß diese auf den sich stirnseitig gegenüberliegenden Halbkreisen des Ringabschnitts 6 zum Anschlagen kommen. Die geometrische Konfiguration des Ringabschnitts 6 der Schlaufe 1 ebenso wie die Anordnung der Halteösen 2, 3 ist dabei idealerweise so gewählt, daß deren Kreismittelpunkte mit dem jeweiligen Kreismittelpunkt der einander stirnseitig gegenüberliegenden Halbkreise des Ringabschnitts 6 der Schlaufe 1 zusammenfallen.

Der Ringabschnitts 6 ist aus einem Metall hergestellt, wobei sich dessen Tilgermasse nach den Auslegungserfordernissen des Zwei-Massen-Federsystems für den zu tilgenden Schwingungsbereich in Zusammenhang mit den entsprechend auszulegenden Federsteifigkeiten der einzelnen Elastomerstege 4, 4', 5, 5' bestimmt. Schwerere Massen lassen sich beispielsweise über den Werkstoff Stahl mit entsprechenden Abmessungen des Ringabschnitts 6 erzielen, während sich geringere Tilgermassen durch die Verwendung von z.B. Aluminium ergeben.

## Patentansprüche

**1.** Elastische Aufhängung für schwingende Bauteile, insbesondere Halteschlaufe für eine Kraftfahrzeugabgasanlage, bei der eine Schlaufe zwei innenliegende Halteösen aufweist, die über Elastomerstege mit einem umgebenden Ringabschnitt der Schlaufe verbunden sind,
**gekennzeichnet durch**
eine Ausbildung der Aufhängung als Zwei-Massen-Federsystem zur Tilgung von Störschwingungen mit dem Ringabschnitt (6) der Schlaufe (1) als Tilgermasse.

**2.** Aufhängung nach Anspruch 1,
**gekennzeichnet durch**
mindestens eine Gruppe von vier am Ringabschnitt (6) der Schlaufe (1) angebundenen Elastomerstege (4,4';5,5'), die an jeweils einer Halteöse (2,3) kreuzförmig, tragend und stützend, angreifen.

**3.** Aufhängung nach Anspruch 2,
**gekennzeichnet durch**
eine untereinander nicht uniforme Konfiguration der jeweils vier an einer der Halteösen (2,3) angreifenden Elastomerstege (4,4';5,5').

**6.** Aufhängung nach einem der Ansprüche 2 oder 3,
**gekennzeichnet durch**
eine spiegelsymmetrische Ausbildung des Ringabschnitts (6) der Schlaufe (1) in der Weise, daß eine gemeinsame Querschnittsmittelachse der Halteösen (2,3) in einer Spiegelsymmetrieebene des Ringabschnitts (6) der Schlaufe (1) liegt.

**5.** Aufhängung nach einem der Ansprüche 1 bis 6,
**gekennzeichnet durch**
eine Ausbildung des Ringabschnitts (6) der Schlaufe (1) aus einem Metall oder einem temperaturbeständigen Kunststoff mit einer auf die zu tilgende Störschwingung abgestimmten Masse.

**6.** Aufhängung nach Anspruch 5,
**gekennzeichnet durch**,
eine im Querschnitt ringförmige Tilgermasse im Ringabschnitt (6) der Schlaufe (1), die in eine Elastomerschicht einvulkanisiert und über diese stoffschlüssig mit den Elastomerstegen (4,4';5,5') verbunden ist.

**7.** Aufhängung nach einem der Ansprüche 1 bis 6,
**gekennzeichnet durch**,
eine Abstimmung der Tilgung über die Federsteifigkeiten der Elastomerstege (4,4';5,5').
